(19) Europäisches Patentamt
European Patent Office
Office européen des brevets

(11) **EP 3 918 429 B1**

(12) **EUROPÄISCHE PATENTSCHRIFT**

(45) Veröffentlichungstag und Bekanntmachung des Hinweises auf die Patenterteilung:
**30.10.2024 Patentblatt 2024/44**

(21) Anmeldenummer: **19723022.0**

(22) Anmeldetag: **18.04.2019**

(51) Internationale Patentklassifikation (IPC):
**G05B 15/02** *(2006.01)* **G06Q 50/06** *(2024.01)*

(52) Gemeinsame Patentklassifikation (CPC):
**G06Q 50/06; G05B 15/02**

(86) Internationale Anmeldenummer:
**PCT/EP2019/060179**

(87) Internationale Veröffentlichungsnummer:
**WO 2020/192944 (01.10.2020 Gazette 2020/40)**

(54) **VERFAHREN UND VORRICHTUNG ZUM STEUERN EINES WASSERVERSORGUNGSNETZES**

METHOD AND DEVICE FOR CONTROLLING A WATER SUPPLY NETWORK

PROCÉDÉ ET DISPOSITIF DE COMMANDE D'UN RÉSEAU D'ALIMENTATION EN EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2019 DE 102019204330**

(43) Veröffentlichungstag der Anmeldung:
**08.12.2021 Patentblatt 2021/49**

(73) Patentinhaber: **Siemens Aktiengesellschaft**
**80333 München (DE)**

(72) Erfinder:
• **FINK, Rafael**
**81829 München (DE)**

• **HANSS, Holger**
**76726 Germersheim (DE)**
• **HELD, Harald**
**85461 Bockhorn (DE)**
• **LADE, Markus**
**91052 Erlangen (DE)**
• **SOHR, Annelie**
**81929 München (DE)**

(74) Vertreter: **Siemens Patent Attorneys**
**Postfach 22 16 34**
**80506 München (DE)**

(56) Entgegenhaltungen:
**EP-A1- 3 450 638**

Processed by Luminess, 75001 PARIS (FR)

**Beschreibung**

Die Erfindung betrifft ein Verfahren zum Steuern eines Wasserversorgungsnetzes nach dem Oberbegriff von Anspruch 1.

Die Erfindung betrifft ferner eine Vorrichtung zum Steuern eines Wasserversorgungsnetzes nach dem Oberbegriff von Anspruch 5.

Ein derartiges Verfahren bzw. eine derartige Vorrichtung sind aus der EP 3 450 638 A1 bekannt.

Das bekannte Verfahren bzw. die bekannte Vorrichtung dient zum Steuern eines Wasserversorgungsnetzes, das Knotenkomponenten und Kantenkomponenten umfasst. An den Knotenpunkten kann Wasser eingespeist, entnommen, verteilt oder gespeichert werden. Bei den Knotenkomponenten kann es sich somit um Einspeiser wie Brunnen, Quellen oder Fremdwasserlieferanten, Wasserverbraucher und um Wasserbehälter wie Tanks oder Becken handeln. Über die Kantenkomponenten wird das Wasser zwischen den Knotenkomponenten transportiert. Bei den Kantenkomponenten kann es sich um passive Komponenten wie Rohre sowie um aktive, steuerbare Komponenten wie Pumpen oder Ventile handeln. Die Steuerung der aktiven Kantenkomponenten und damit der Durchfluss von Wasser erfolgt nach Maßgabe eines Steuerplans (Fahrplan), in dem eine zeitliche Abfolge der Ansteuerungen der steuerbaren Kantenkomponenten festgelegt wird. Der Steuerplan wird auf Basis von Randbedingungen derart bestimmt, dass für einen in Zeitscheiben (z. B. Stunden) unterteilten Planungszeitraum (z. B. Tage, Woche) in jeder Zeitscheibe eine vorbestimmte Wasserbilanz des Wasserversorgungsnetzes im zeitlichen Mittel eingehalten wird. Zu den Randbedingungen gehören beispielsweise obere und untere Grenzen für Einspeisungen von Wasser in das Wasserversorgungsnetz in den einzelnen Zeitscheiben und voraussichtliche Entnahmen von Wasser aus dem Wasserversorgungsnetz in den Zeitscheiben. Für jeden Wasser speichernden Knotenpunkt wird als Randbedingung jeweils ein Mindestfüllstand vorgegeben, der nicht unterschritten werden darf, um die Wasserversorgung zu gewährleisten.

Unter Einhaltung der Randbedingungen wird der Steuerplan anhand einer Zielfunktion (Kostenfunktion) optimiert, um den Energieverbrauch durch die steuerbaren Komponenten, z. B. Pumpen, des Wasserversorgungsnetzes zu minimieren und/oder den Verschleiß bzw. die Beanspruchung der Komponenten, z. B. Ventile, zu minimieren, indem ihre Schaltvorgänge minimiert werden. Dazu werden in der Zielfunktion für jede steuerbare Kantenkomponente die Anzahl ihrer Ansteuerungen mit einem Kostensatz für einen Energieverbrauch und/oder Verschleiß der jeweiligen Kantenkomponente multipliziert und anschließend die Summe über alle Kantenkomponenten gebildet, um die Gesamtkosten zu erhalten, die zu minimieren sind. Der Begriff Kosten ist nicht nur monetär zu verstehen, sondern umfasst auch Verbrauch, Aufwand, Verschleiß usw., was sich letztlich aber wieder in Kosten niederschlägt.

Bei der Versorgung ihrer Kunden mit Trinkwasser müssen Wassernetzbetreiber die Sicherheit dieser Versorgung garantieren, damit auch in Extremsituationen, z. B. bei Ausfall des Wassernachschubs oder plötzlicher Zunahme der Abnahmemengen, die Wasserversorgung über einen gewissen Zeitraum sichergestellt ist. In Abhängigkeit davon, wie schnell auf solche Ereignisse reagiert werden kann (Zeit zur Wiederherstellung bzw. Erhöhung des Wassernachschubs), müssen die Mindestfüllstände der Behälter bemessen werden. Gleichzeitig wollen die Wasserbetreiber natürlich möglichst energie- und kosteneffizient operieren, indem sie z. B. energieintensives Pumpen zu Zeiten hoher Energiepreise vermeiden oder Tarifmerkmale wie atypische Netznutzung optimal nutzen. Versorgungsicherheit und Kostenoptimalität können dabei konkurrierende Ziele sein.

Der Erfindung liegt das konkrete Problem zugrunde, gleichzeitig Versorgungssicherheit und Energie- und Kosteneffizienz in den aktuellen Betriebsentscheidungen (Schaltungen von Pumpen, Öffnen von Ventilen) zu berücksichtigen.

Die Versorgungssicherheit hat generell oberste Priorität. Traditionell wird sie garantiert, indem hohe Mindestfüllstände in Trinkwasserspeichern eingehalten werden müssen. Diese konservativ gewählten Grenzen schränken den Spielraum für einen energie- und kosteneffizienten Betrieb signifikant ein. Energie und Kosten werden daher bei den aktuellen Betriebsentscheidungen oft gar nicht einbezogen, z. B. wenn nach einem festen Regelsatz Pumpen angeschaltet werden, sobald ein gewisser Füllstand im Speicher unterschritten wird, und ausgeschaltet werden, sobald ein maximaler Füllstand erreicht ist. Oder es wird dem Leitstandpersonal mit seinem Expertenwissen überlassen, zu entscheiden, wie und wann Pumpen zu schalten und Ventile zu öffnen sind, um die geforderten Mindestfüllstände einzuhalten. Eine innovativere Herangehensweise ist es, durch eine vorausschauende Modellbetrachtung des Systems über die folgenden Stunden bis Tage geeignete oder sogar in Bezug auf Energie und Kosten optimale Fahrpläne für Pumpen und Ventile zu ermitteln, die die geforderten Mindestfüllstände einhalten. Allerdings ist, wie schon erwähnt, bei den konservativ gewählten Mindestfüllständen der Spielraum für Einsparungen begrenzt. Die vorausschauende Betrachtung erlaubt es zwar, die Mindestfüllstände niedriger anzusetzen, wenn durch die Modellrechnung nachgewiesen wird, dass trotz niedrigerer Mindestfüllstände, die Versorgungssicherheit in den folgenden Stunden und Tagen gewährleistet ist, jedoch resultiert durch die Absenkung der Mindestfüllstände eine gewisse Verringerung der Versorgungssicherheit, wodurch die Akzeptanz solcher innovativer Systeme leidet.

Gemäß der Erfindung wird dieses Problem durch das in Anspruch 1 definierte Verfahren bzw. die in Anspruch 5 definierte Vorrichtung gelöst.

Vorteilhafte Weiterbildungen der Erfindung sind in den Unteransprüchen angegeben.

Gemäß der Erfindung wird also für jeden der Wasser speichernden Knotenpunkte (Behälter, Speicher, Becken usw.) jeweils ein den Mindestfüllstand überschreitender Sicherheitsfüllstand festgelegt und die Zielfunktion für jeden dieser Wasser speichernden Knotenpunkte um jeweils einen weiteren Summanden in Form eines von dem Füllstand abhängigen weiteren Kostensatzes ergänzt, der bei einem dem Sicherheitsfüllstand entsprechenden Füllstand minimal und bei einem dem Mindestfüllstand entsprechenden Füllstand maximal ist.

Wie in den erwähnten innovativen, modellbasierten Ansätzen wird ein abgesenkter Mindestfüllstand verwendet, der nicht unterschritten werden darf. Zusätzlich wird ein höherer Sicherheitsfüllstand z.B. auf Höhe des traditionell konservativ gewählten Mindestfüllstands festgelegt. Mit einer vorausschauenden Modellbetrachtung kann der Steuerplan (Fahrplan) für die Pumpen und Ventile bewertet und optimiert werden. Die Zielfunktion ist dabei nicht nur wie bisher der Energieverbrauch bzw. die Energie- und Schaltkosten, sondern es werden zusätzlich virtuelle Kosten in Form der weiteren Kostensätze bei einer Absenkung des Füllstands unter den Sicherheitsfüllstand angesetzt. Die virtuellen Kosten (weiteren Kostensätze) sind dabei umso höher, je weiter der Füllstand abgesenkt wird und sich dem Mindestfüllstand nähert.

Die virtuellen Kosten bzw. weiteren Kostensätze können nach Maßgabe einer vorgegebenen Funktion in Abhängigkeit von der Differenz zwischen dem Füllstand und dem Mindestfüllstand oder Sicherheitsfüllstand des jeweiligen, Wasser speichernden Knotenpunkts berechnet werden. Im einfachsten Fall steigen die virtuellen Kosten ausgehend von dem Wert Null bei Sicherheitsfüllstand mit zunehmender Annäherung des Füllstandes an den Mindestfüllstand linear an. Es ist aber auch möglich, dass dieser Anstieg progressiv erfolgt.

Die Kostensätze für den Energieverbrauch und/oder Verschleiß und die weiteren Kostensätze für die Füllstände können mit unterschiedlichen Gewichtsfaktoren versehen werden, d. h., die realen Kosten und die virtuellen Kosten können konfigurierbar unterschiedlich gewichtet werden.

Der Vorteil gegenüber dem oben erwähnten traditionellem Ansatz mit hohen Mindestfüllständen besteht darin, dass Energiebrauch und Kosten überhaupt berücksichtigt und im laufenden Betrieb gespart werden. Gegenüber den ebenfalls oben erwähnten innovativen Bewertungs- und Optimierungsansätzen besteht der Vorteil, dass neben dem Energieverbrauch bzw. den Kosten zusätzlich die Versorgungssicherheit berücksichtigt wird. Ergeben sich bei der Optimierung des Steuerplans für die Pumpen und Ventile unterschiedliche Fahrweisen, die aus Energie- und Kostensicht gleichwertig sind, so wird die Fahrweise vorgeschlagen, die die größtmögliche Versorgungssicherheit garantiert. Gibt es unterschiedliche Fahrweisen, die sich bzgl. Energie und Kosten geringfügig unterscheiden, aber bzgl. Versorgungssicherheit deutliche Unterschiede aufweisen, so werden Fahrweisen vorgeschlagen, die zwar einen etwas höheren Energieverbrauch oder etwas höhere Kosten verursachen, aber bzgl. Versorgungssicherheit einen deutlichen Gewinn bringen. Gibt es unterschiedliche Fahrweisen, die sich bzgl. Energie und Kosten deutlich unterscheiden, aber bzgl. Versorgungssicherheit nur geringe Unterschiede aufweisen, so werden Fahrweisen vorgeschlagen, die bzgl. Versorgungssicherheit geringe Abstriche machen, aber bzgl. Energie und Kosten deutliche Einsparungen ermöglichen. Die vorausschauende Betrachtungsweise innovativer Systeme erlaubt zudem ein frühzeitiges Erkennen (Frühwarnsystem), wann möglicherweise Sicherheitsfüllstände erreicht bzw. unterschritten werden und erlaubt so ein frühzeitiges Gegenwirken falls gewünscht. Die Erfindung ermöglicht damit Einsparungen bei Energie und Kosten bei gleichzeitigem Fokus auf Versorgungssicherheit, was die Akzeptanz solcher Systeme in der Wasserwirtschaft erhöhen wird.

Im Weiteren wird die Erfindung beispielhaft anhand der Figuren der Zeichnung erläutert; im Einzelnen zeigen:

Fig. 1    ein beispielhaftes Wasserversorgungsnetz,

Fig. 2    ein Ablaufdiagramm eines exemplarischen Verfahrens zum Steuern eines Wasserversorgungsnetzes und

Fig. 3    Beispiele für virtuelle Kosten bei Absenkung des Füllstands unter den Sicherheitsfüllstand.

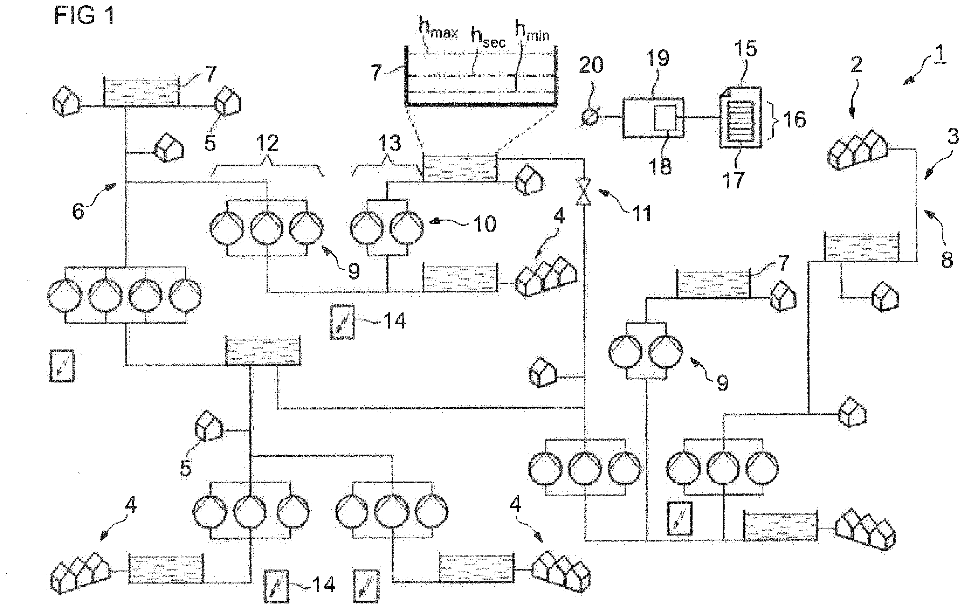

Fig. 1 zeigt ein Wasserversorgungsnetz 1 wie z. B. ein kommunales Versorgungsnetz zur Trinkwasserversorgung. Das Wasserversorgungsnetz 1 umfasst Knotenkomponenten 2 und Kantenkomponenten 3. An den Knotenpunkten 2 kann Wasser eingespeist, entnommen, verteilt oder gespeichert werden. Bei den Knotenkomponenten 2 kann es sich somit um Einspeiser 4 wie Brunnen, Quellen oder Fremdwasserlieferanten, Wasserverbraucher 5, um Wasserverteilungspunkte 6 und um Wasserbehälter 7 wie Tanks oder Becken handeln. Über die Kantenkomponenten 3 wird das Wasser zwischen den Knotenkomponenten 2 transportiert. Bei den Kantenkomponenten 2 kann es sich um passive Komponenten wie Rohre 8 und um aktive, steuerbare Komponenten wie Pumpen 9, Turbinen 10 oder Ventile 11 handeln. Mehrere Pumpen 9 oder Turbinen 10 können in einer Pumpstation 12 bzw. Turbinenstation 13 parallelgeschaltet sein. Die Pumpen 9 oder Turbinen 10 können geschaltet oder in Stufen oder stufenlos gesteuert werden. Ebenso können die Ventile 11 geschaltet (Schaltventile) oder gesteuert werden (Regelventile). Die steuerbaren Komponenten 9, 10, 11 werden über elektrische Energieversorger 14 gespeist, die üblicherweise einen Anschluss oder Übergabepunkt eines Energieversorgungsnetzes umfassen.

Die Steuerung der steuerbaren Kantenkomponenten, also hier z. B. der Pumpen 9, Turbinen 10 und Ventile 11, erfolgt nach Maßgabe eines Steuerplans (Fahrplan) 15, in dem eine zeitliche Abfolge der Ansteuerungen der steuerbaren Kantenkomponenten 9, 10, 11 festgelegt ist. Der Steuerplan 15 betrifft bevorzugt einen vorbestimmten Planungshorizont 16, der in einzelne Zeitscheiben 17 unterteilt werden kann. Der Planungshorizont 16 kann beispielsweise einen oder mehrere Tage umfassen, wobei eine Zeitscheibe 17 beispielsweise eine Stunde beträgt. Der Steuerplan 15 wird in einer Verarbeitungseinrichtung 18, z. B. in Form eines programmierbaren Mikrocomputers, einer Steuervorrichtung 19 auf Basis von Randbedingungen derart bestimmt, dass in jeder Zeitscheibe 17 eine vorbestimmte Wasserbilanz des Wasserversorgungsnetzes im zeitlichen Mittel eingehalten wird. Zu den Randbedingungen gehören u. a. obere und untere Grenzen für Einspeisungen von Wasser in das Wasserversorgungsnetz in den einzelnen Zeitscheiben 17 und voraussichtliche Entnahmen von Wasser aus dem Wasserversorgungsnetz in den Zeitscheiben 17. Für jeden Wasser speichernden Knotenpunkt 7 wird als Randbedingung jeweils ein Mindestfüllstand $h_{min}$ vorgegeben, der nicht unterschritten werden darf, um die Wasserversorgung zu gewährleisten.

Die Steuervorrichtung 19 kann zentral oder dezentral ausgebildet und verfügt über eine Schnittstelle 20 zur Ansteuerung der steuerbaren Kantenkomponenten 9, 10, 11.

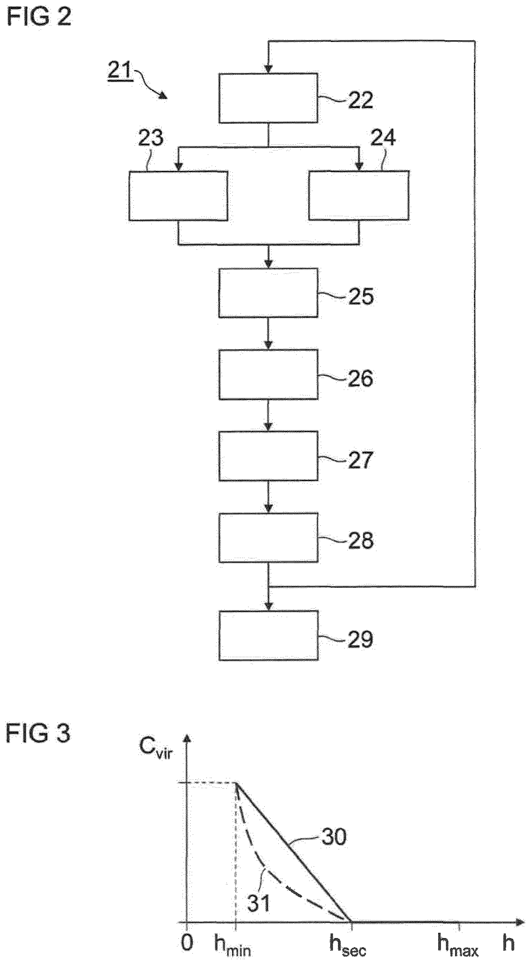

Fig 2 zeigt ein beispielhaft Ablaufdiagramm eines Verfahrens 21 zum Steuern des in Fig. 1 gezeigten Wasserversorgungsnetzes 1. Einzelne Schritte des Verfahrens 21 können in einer anderen als der angegebenen Reihenfolge durchgeführt werden. Das Verfahren 21 kann insbesondere, ganz oder in Teilen, auf der Steuervorrichtung 19 ausgeführt werden. Dazu kann die Steuervorrichtung 19 einen programmierbaren Mikrocomputer oder Mikrocontroller umfassen, und das Verfahren 21 kann zumindest teilweise in Form eines Computerprogrammprodukts mit Programmcodemitteln vorliegen.

In einem Schritt 22 können der Planungshorizont 16 und die Zeitscheiben 17 bestimmt werden.

In einem Schritt 23 können Einspeisegrenzen der Wassereinspeiser 4 bestimmt werden.

Parallel dazu können in einem Schritt 24 Entnahmen durch Wasserverbraucher 5 bestimmt bzw. vorhergesagt werden.

In einem Schritt 25 können Betriebskonfigurationen, insbesondere die Konfiguration der Kantenkomponenten 3 des Wasserversorgungsnetzes 1 bestimmt werden. Bespiele dafür sind die Energieaufnahmen von Pumpen 9 oder Durchflüsse in den Rohren 8.

In einem Schritt 26 können Energiekosten bestimmt werden. Diese können fix oder variabel sein, und im letztgenannten Fall für die Zeitscheiben 17 einzeln bestimmt werden. Die Energiekosten sind relevant für die Energie, die beispielsweise durch eine Pumpe 9 aufgenommen wird, wenn sie angesteuert bzw. eingeschaltet wird.

In einem Schritt 27 können Zustände von Knotenkomponenten 2 je Zeitscheibe 17 bestimmt werden. Beispiele dafür sind das maximale Behältervolumen bzw. der maximal zulässige Füllstand $h_{max}$ und der Mindestfüllstand $h_{min}$ von Behältern 7.

In einem Schritt 28 können Anfangszustände der Komponenten des Wasserversorgungsnetzes 1 bestimmt werden. Beispiele dafür sind die Stellungen von Ventilen 11 oder Füllstände in Behältern 7.

Auf Basis der in den Schritten 22 bis 28 gesammelten Informationen kann in einem Schritt 29 der Steuerplan 15 ermittelt werden. Die konkrete Bestimmung des Steuerplans 170 erfolgt bevorzugt als Optimierung innerhalb eines Suchraums, der durch die oben beschriebenen Randbedingungen vorgegeben ist. Detaillierte Beispiele für eine gemischt-ganzzahlige lineare Optimierung sind in der eingangs erwähnten EP 3 450 638 A1 beschrieben, auf die hier explizit Bezug genommen wird. Der ermittelte Steuerplan 15 kann in Teilen oder vollständig an die Steuervorrichtung 19 zur Steuerung des Wasserversorgungsnetzes 1 übergeben werden. Zusätzlich oder alternativ kann der Steuerplan 15 an das Leitstandpersonal ausgegeben werden, das anhand des Planes 17 Entscheidungen für die Steuerung vornehmen oder in die automatische Steuerung eingreifen kann.

Die Optimierung des Steuerplan 15 erfolgt anhand einer Zielfunktion, in der für jede steuerbare Kantenkomponente 9, 10, 11 die Anzahl ihrer Ansteuerungen mit einem Kostensatz für einen Energieverbrauch und/oder Verschleiß der jeweiligen Kantenkomponente 9, 10, 11 multipliziert und anschließend die Summe über alle steuerbaren Kantenkomponenten 9, 10, 11 gebildet wird. Zusätzlich wird für jeden der Wasser speichernden Knotenpunkte 7 jeweils ein den Mindestfüllstand $h_{min}$ überschreitender Sicherheitsfüllstand $h_{sec}$ festgelegt und die Zielfunktion für jeden Wasser speichernden Knotenpunkt 9 um jeweils einen weiteren Summanden in Form eines weiteren Kostensatzes ergänzt, der von dem Füllstand abhängig ist. Dieser weitere Kostenfaktor wird so gewählt bzw. gewichtet, dass er minimal, z. B. Null, ist, wenn der Füllstand dem Sicherheitsfüllstand $h_{sec}$ entspricht oder über diesem liegt. Der weitere Kostenfaktor ist maximal, wenn der Füllstand den Mindestfüllstand $h_{min}$ erreicht, der, wie bereits erwähnt, nicht unterschritten werden darf.

Damit ergibt sich, vereinfacht, schließlich folgende Zielfunktion:

$$Z = w_{real} \cdot C_{real} + w_{vir} \cdot C_{vir} \, ,$$

wobei $C_{real}$ die Summe der realen Kosten für den Energieverbrauch und das Schalten der schaltbaren Kantenkomponenten 9, 10, 11 und $C_{vir}$ die Summe der virtuellen Kosten für unter dem Sicherheitsfüllstand $h_{sec}$ liegende Füllstände der Wasser speichernden Knotenpunkte 7 bezeichnen. Die realen Kosten $C_{real}$ und virtuellen Kosten $C_{vir}$ können mit Gewichtsfaktoren $w_{real}$ bzw. $w_{vir}$ unterschiedlich gewichtet werden.

Fig. 3 zeigt beispielhaft die Abhängigkeit der virtuellen Kosten $C_{vir}$ von dem Füllstand h, wobei die Kurve 30 eine lineare Abhängigkeit wiedergibt und die Kurve 31 einen progressiven Anstieg der virtuellen Kosten $C_{vir}$ mit zunehmender Annäherung des Füllstandes h an den Mindestfüllstand $h_{sec}$ verdeutlicht.

Im Folgenden wird ausgehend von und Bezug nehmend auf das in der EP 3 450 638 A1 ausführlich beschriebene bekannte Verfahren eine Ausführungsform des Verfahrens 21 zum Steuern des Wasserversorgungsnetzes 1 genauer erläutert.

Die in der EP 3 450 638 A1 angegebene Liste von Parametern kann um die beiden folgenden Parameter erweitert werden:

$\psi_{v,t}^{min}$      Sicherheitsbestand an gespeichertes Wasservolumen (gemessen z. B. in m³) in der Knotenkomponente v während der Zeitscheibe t und insbesondere auch zum Ende der Zeitscheibe t; der Sicherheitsbestand darf zwar prinzipiell unterschritten werden, ein entsprechendes Defizit an Wasservolumen im Vergleich zum Sicherheitsbestand wird allerdings mit (virtuellen) Strafkosten belegt; es sollte stets gelten $\psi_{v,t}^{min} \geq \sigma_{v,t}^{min}$ ; für alle Knotenkomponenten, die keine Tanks sind, gilt stets $\psi_{v,t}^{min} = 0$ .

$\gamma_{v,t}^{min}$      Kostensatz pro m³ Wasserdefizit beim gespeicherten Wasservolumen ( $w_{v,t}^{end}$ oder $w_{v,t}^{s}$ ) im Vergleich zum Sicherheitsbestand $\psi_{v,t}^{min}$ für die Knotenkomponente **v** während der Zeitscheibe **t**; dieser Parameter entspricht dem virtuellen Strafkostensatz der im Modell für die Unterschreitung des gewünschten Wasservolumen-Sicherheitsbestands pro Kubikmeter Wasserdefizit zu zahlen ist.

Die in der EP 3 450 638 A1 angegebene Liste von Variablen kann um die folgenden Variablen erweitert werden:

$x_{v,t}^{+} \geq 0$      Variable zur Bestimmung einer positiven Abweichung des in der Knotenkomponente **v** zum Ende der Zeitscheibe **t** gespeicherten Wasservolumens $w_{v,t}^{end}$ im Vergleich zum Sicherheitsbestand $\psi_{v,t}^{min}$ (alle gemessen z. B. in m³), ($v \in V, t \in T$).

$x_{v,t}^{-} \geq 0$      Variable zur Bestimmung einer negativen Abweichung des in der Knotenkomponente **v** zum Ende der Zeitscheibe **t** gespeicherten Wasservolumens $w_{v,t}^{end}$ im Vergleich zum Sicherheitsbestand $\psi_{v,t}^{min}$ (alle gemessen z. B. in m³), ($v \in V, t \in T$).

$y_{v,t}^{+} \geq 0$      Variable zur Bestimmung einer positiven Abweichung des in der Knotenkomponente **v** zum Zeitpunkt des potentiellen Schaltzeitpunkts während der Zeitscheibe **t** gespeicherten Wasservolumens $w_{v,t}^{s}$ im Vergleich zum Sicherheitsbestand $\psi_{v,t}^{min}$ (alle gemessen z. B. in m³), ($v \in V, t \in T$).

$y_{v,t}^{-} \geq 0$      Variable zur Bestimmung einer negativen Abweichung des in der Knotenkomponente **v** zum Zeitpunkt des potentiellen Schaltzeitpunkts während der Zeitscheibe **t** gespeicherten Wasservolumens $w_{v,t}^{s}$ im Vergleich zum Sicherheitsbestand $\psi_{v,t}^{min}$ (alle gemessen z. B. in m³), ($v \in V, t \in T$).

Es können weiterhin folgende zusätzlichen Nebenbedingungen (2a) und (2b) festgelegt werden:

$$(2a) \quad w_{v,t}^{end} = \psi_{v,t}^{min} + x_{v,t}^{+} - x_{v,t}^{-} \qquad\qquad (v \in V, t \in T)$$

Die Nebenbedingung (2a) definiert die Abweichung der in der Knotenkomponente *v* zum Endzeitpunkt der Zeitscheibe *t* gespeicherten Wassermenge $w_{v,t}^{end}$ im Vergleich zum in dieser Zeitscheibe definierten Sicherheitsbestand $\psi_{v,t}^{min}$. Beim Unterschreiten dieses Sicherheitsbestands nimmt in der Optimallösung die Variable $x_{v,t}^{+}$ aufgrund der Kostenminimierung stets den Wert 0 an, so dass der positive Wert der Variable $x_{v,t}^{-}$ so gering wie möglich ausfällt (und somit der tatsächlichen Bestands-Unterschreitung entspricht).

$$(2b) \quad w_{v,t}^{s} = \psi_{v,t}^{min} + y_{v,t}^{+} - y_{v,t}^{-} \qquad (v \in V, t \in T)$$

Die Nebenbedingung (2b) entspricht der Nebenbedingung (2a) mit dem Unterschied, dass hier nicht der Endzeitpunkt der Zeitscheibe *t* betrachtet wird, sondern der potentielle Schaltzeitpunkt der Kantenkomponente *v* innerhalb dieser Zeitscheibe.

Die Zielfunktion kann um den folgenden Summanden (25a) erweitert werden:

$$(25a) \quad \sum_{v \in V}\left(\sum_{t \in T} \gamma_{v,t}^{min} \cdot (x_{v,t}^{-} + y_{v,t}^{-})\right)$$

Formel (25a) beschreibt die virtuellen Kosten, die mit Unterschreitungen des Sicherheitsbestands $\psi_{v,t}^{min}$ assoziiert sind. Hierfür werden alle den Sicherheitsbestand unterschreitenden Wasservolumina, die innerhalb des Planungshorizonts auftreten, addiert und anschließend mit dem zugehörigen Kostensatz multipliziert.

**Patentansprüche**

1. Verfahren (21) zum Steuern eines Wasserversorgungsnetzes (1), das Knotenkomponenten (2; 4, 5, 6, 7) und Kantenkomponenten (3; 8, 9, 10, 11) umfasst,

   wobei an den Knotenkomponenten (2; 4, 5, 6, 7) Wasser eingespeist, entnommen oder gespeichert wird und über die Kantenkomponenten (3; 8, 9, 10, 11) das Wasser zwischen den Knotenkomponenten (2; 4, 5, 6, 7) transportiert wird,
   wobei mehrere der Kantenkomponenten (9, 10, 11) bezüglich ihres Durchflussverhaltens für das Wasser steuerbar sind und nach Maßgabe eines Steuerplans (15) gesteuert werden, der eine zeitliche Abfolge von Ansteuerungen der steuerbaren Kantenkomponente (9, 10, 11) enthält,
   wobei der Steuerplan (15) auf Basis von Randbedingungen bestimmt wird, die für jede Wasser speichernde Knotenkomponente (7) jeweils einen Mindestfüllstand (h$_{min}$) enthalten, der nicht unterschritten werden darf, und wobei der Steuerplan (15) anhand einer Zielfunktion optimiert wird, in der für jede steuerbare Kantenkomponente (9, 10, 11) die Anzahl ihrer Ansteuerungen mit einem Kostensatz für einen Energieverbrauch und/oder Verschleiß der jeweiligen Kantenkomponente (9, 10, 11) multipliziert und anschließend die Summe über alle steuerbaren Kantenkomponenten (9, 10, 11) gebildet wird,
   **dadurch gekennzeichnet,**
   **dass** für jede der Wasser speichernden Knotenkomponenten (7) jeweils ein den Mindestfüllstand (h$_{min}$) überschreitender Sicherheitsfüllstand (h$_{sec}$) festgelegt wird und dass die Zielfunktion für jede Wasser speichernde Knotenkomponente (7) um jeweils einen weiteren Summanden in Form eines von dem Füllstand abhängigen weiteren Kostensatzes ergänzt wird, der bei einem dem Sicherheitsfüllstand (h$_{sec}$) entsprechenden Füllstand minimal und bei einem dem Mindestfüllstand (h$_{min}$) entsprechenden Füllstand maximal ist,
   wobei der Steuerplan (15) in einer Verarbeitungseinrichtung (18) einer Steuervorrichtung (19) auf Basis der Randbedingungen bestimmt wird,
   wobei die Steuervorrichtung (19) eine Schnittstelle (20) zur Ansteuerung der steuerbaren Kantenkomponenten (9, 10, 11) umfasst, und
   wobei der Steuerplan (15) in Teilen oder vollständig an die Steuervorrichtung (19) zur Steuerung des Wasserversorgungsnetzes (1) übergebbar ist.

2. Verfahren nach Anspruch 1, **dadurch gekennzeichnet, dass** der weitere Kostensatz nach Maßgabe einer vorgegebenen Funktion in Abhängigkeit von der Differenz zwischen dem Füllstand und dem Mindestfüllstand ($h_{min}$) oder Sicherheitsfüllstand ($h_{sec}$) der jeweiligen, Wasser speichernden Knotenkomponente (7) berechnet wird.

3. Verfahren nach Anspruch 1, **dadurch gekennzeichnet, dass** die Funktion eine lineare Funktion ist.

4. Verfahren nach einem der vorangehenden Ansprüche, **dadurch gekennzeichnet, dass** die Kostensätze für den jeweiligen Energieverbrauch und/oder Verschleiß und die weiteren Kostensätze für den jeweiligen Füllstand mit unterschiedlichen Gewichtsfaktoren versehen werden.

5. Vorrichtung (19) zum Steuern eines Wasserversorgungsnetzes (1), das Knotenkomponenten (2; 4, 5, 6, 7) und Kantenkomponenten (3; 8, 9, 10, 11) umfasst, wobei an den Knotenkomponenten (2; 4, 5, 6, 7) Wasser eingespeist, entnommen oder gespeichert wird, über die Kantenkomponenten (3; 8, 9, 10, 11) das Wasser zwischen den Knotenkomponenten (2; 4, 5, 6, 7) transportiert wird und mehrere der Kantenkomponenten (9, 10, 11) bezüglich ihres Durchflussverhaltens für das Wasser steuerbar sind,

wobei die Vorrichtung (19) dazu ausgebildet ist, die steuerbaren Kantenkomponenten (9, 10, 11) nach Maßgabe eines Steuerplans (15) zu steuern und
wobei die Vorrichtung (19) eine Verarbeitungseinrichtung (18) umfasst, die dazu eingerichtet ist,

- den Steuerplan (15) in Form einer zeitlichen Abfolge von Ansteuerungen der steuerbaren Kantenkomponenten (9, 10, 11) auf Basis von Randbedingungen zu erstellen, die für jede Wasser speichernde Knotenkomponente (7) jeweils einen Mindestfüllstand ($h_{sec}$) enthalten, der nicht unterschritten werden darf, und
- den Steuerplan (15) anhand einer Zielfunktion zu optimieren, in der für jede steuerbare Kantenkomponente (9, 10, 11) die Anzahl ihrer Ansteuerungen mit einem Kostensatz für einen Energieverbrauch und/oder Verschleiß der jeweiligen Kantenkomponente (9, 10, 11) multipliziert und anschließend die Summe über alle steuerbaren Kantenkomponenten (9, 10, 11) gebildet wird,

**dadurch gekennzeichnet,**
**dass** die Verarbeitungseinrichtung (18) ferner dazu eingerichtet ist, für jede der Wasser speichernden Knotenkomponenten (7) jeweils einen den Mindestfüllstand ($h_{min}$) überschreitenden Sicherheitsfüllstand ($h_{sec}$) festzulegen und die Zielfunktion für jede Wasser speichernde Knotenkomponente (7) um jeweils einen weiteren Summanden in Form eines von dem Füllstand abhängigen weiteren Kostensatzes zu ergänzen, der bei einem dem Sicherheitsfüllstand ($h_{sec}$) entsprechenden Füllstand minimal und bei einem dem Mindestfüllstand ($h_{min}$) entsprechenden Füllstand maximal ist, wobei der Steuerplan (15) in der Verarbeitungseinrichtung (18) einer Steuervorrichtung (19) auf Basis der Randbedingungen bestimmt wird,
wobei die Steuervorrichtung (19) eine Schnittstelle (20) zur Ansteuerung der steuerbaren Kantenkomponenten (9, 10, 11) umfasst, und
wobei der Steuerplan (15) in Teilen oder vollständig an die Steuervorrichtung (19) zur Steuerung des Wasserversorgungsnetzes (1) übergebbar ist.

## Claims

1. Method (21) for controlling a water supply network (1) which comprises node components (2; 4, 5, 6, 7) and edge components (3; 8, 9, 10, 11), wherein water is fed into, withdrawn from, or stored on the node components (2; 4, 5, 6, 7) and the water is transported between the node components (2; 4, 5, 6, 7) via the edge components (3; 8, 9, 10, 11),

wherein a number of the edge components (9, 10, 11) can be controlled in terms of their flow behaviour for the water and are controlled in accordance with a control map (15) which contains a temporal sequence of controls for the controllable edge component (9, 10, 11),
wherein the control map (15) is determined based on boundary conditions which include a minimum fill level ($h_{min}$) for each water-storing node component (7), which minimum fill level must not be undershot, and
wherein the control map (15) is optimised based on a target function in which, for each controllable edge component (9, 10, 11), the number of controls is multiplied by a cost rate for an energy consumption and/or wear of the respective edge component (9, 10, 11) and the total across all controllable edge components (9, 10, 11) is then formed,
**characterised in that**
a safety fill level ($h_{sec}$) which exceeds the minimum fill level ($h_{min}$) is defined in each case for each of the water-storing node components (7) and that the target function for each water-storing node component (7) is supplemented by a further summand in the form of a further cost rate dependant on the fill level in each case, which is minimal at a fill level which corresponds to the safety fill level ($h_{sec}$) and is maximal at a fill level which corresponds to the minimum fill level ($h_{min}$) ,

wherein the control map (15) is determined in a processing facility (18) of a control apparatus (19) on the basis of the boundary conditions,

wherein the control apparatus (19) comprises an interface (20) for controlling the controllable edge components (9, 10, 11), and

wherein the control map (15) can be transferred in parts or completely to the control apparatus (19) for controlling the water supply network (1).

2. Method according to claim 1, **characterised in that** the further cost rate is calculated in accordance with a predefined function depending on the difference between the fill level and the minimum fill level ($h_{min}$) or safety fill level ($h_{sec}$) of the respective water-storing node component (7) .

3. Method according to claim 1, **characterised in that** the function is a linear function.

4. Method according to one of the preceding claims, **characterised in that** the rates for the respective energy consumption and/or wear and the further rates for the respective fill level are provided with different weighting factors.

5. Apparatus (19) for controlling a water supply network (1) which comprises node components (2; 4, 5, 6, 7) and edge components (3; 8, 9, 10, 11), wherein water is fed into, withdrawn from, or stored on the node components (2; 4, 5, 6, 7), the water is transported between the node components (2; 4, 5, 6, 7) via the edge components (3; 8, 9, 10, 11), and a number of the edge components (9, 10, 11) can be controlled in terms of their flow behaviour for the water,

wherein the apparatus (19) is designed to control the controllable edge components (9, 10, 11) in accordance with a control map (15) and

wherein the apparatus (19) comprises a processing facility (18), which is configured to

- generate the control map (15) in the form of a temporal sequence of controls for the controllable edge components (9, 10, 11) based on boundary conditions, which include a minimum fill level ($h_{min}$) for each water-storing node component (7) in each case, which minimum fill level must not be undershot, and
- optimise the control plan (15) based on a target function in which, for each controllable edge component (9, 10, 11), the number of controls is multiplied by a cost rate for an energy consumption and/or wear of the respective edge component (9, 10, 11) and the total across all controllable edge components (9, 10, 11) is then formed,

**characterised in that**
the processing facility (18) is further configured to define a safety fill level ($h_{sec}$) which exceeds the minimum fill level ($h_{min}$) for each of the water-storing node components (7) and that the target function for each water-storing node component (7) is supplemented by a further summand in the form of a further cost rate dependant on the fill level in each case, which is minimal at a fill level which corresponds to the safety fill level ($h_{sec}$) and is maximal at a fill level which corresponds to the minimum fill level ($h_{min}$),

wherein the control map (15) is determined in the processing facility (18) of a control apparatus (19) on the basis of the boundary conditions,

wherein the control apparatus (19) comprises an interface (20) for controlling the controllable edge components (9, 10, 11), and

wherein the control map (15) can be transferred in parts or completely to the control apparatus (19) for controlling the water supply network (1).

**Revendications**

1. Procédé (21) de commande d'un réseau (1) d'adduction d'eau, qui comprend des composants (2 ; 4, 5, 6, 7) de noeuds et des composants (3 ; 8, 9, 10, 11) d'arêtes,

dans lequel on injecte, on prélève ou on accumule de l'eau aux composants (2 ; 4, 5, 6, 7) de noeuds et on transporte l'eau entre les composants (2 ; 4, 5, 6, 7) de noeuds par les composants (3 ; 8, 9, 10, 11) d'arêtes,

dans lequel plusieurs des composants (9, 10, 11) d'arêtes peuvent être commandés en ce qui concerne leur comportement au débit de l'eau et on les commande selon un plan (15) de commande, qui contient une succession dans le temps de commandes des composants (9, 10, 11) d'arêtes pouvant être commandés,

dans lequel on détermine le plan (15) de commande sur la base de conditions aux limites, qui contiennent, pour chaque composant (7) de noeud accumulant de l'eau, respectivement un niveau ($h_{min}$) minimum en-dessous duquel on ne doit pas passer, et

dans lequel on optimise le plan (15) de commande à l'aide d'une fonction cible, dans laquelle on multiplie, pour chaque composant (9, 10, 11) d'arête pouvant être commandé, le nombre de leurs commandes par un ensemble de coûts pour une consommation d'énergie et/ou une usure des composants (9, 10, 11) d'arêtes respectifs, et on forme ensuite la somme sur tous les composants (9, 10, 11) d'arêtes pouvant être commandés,

**caractérisé**

**en ce que**, pour chacun des composants (7) de noeuds accumulant de l'eau, on fixe un niveau ($h_{sec}$) de sécurité dépassant le niveau ($h_{min}$) minimum, et en ce que on complète la fonction cible pour chaque composant (7) de noeud accumulant de l'eau de respectivement une autre somme sous la forme d'un autre ensemble de coûts dépendants du niveau, qui est minimum pour un niveau correspondant au niveau ($h_{sec}$) de sécurité et maximum pour un niveau correspondant au niveau ($h_{min}$) minimum,

dans lequel on détermine le plan (15) de commande dans un dispositif (18) de traitement d'un système (19) de commande sur la base des conditions aux limites,

dans lequel le système (19) de commande comprend une interface (20) de commande des composants (9, 10, 11) d'arêtes pouvant être commandés, et

dans lequel le plan (15) de commande peut être remis en tout ou partie au système (19) de commande pour la commande du réseau (1) d'adduction d'eau.

**2.** Procédé suivant la revendication 1, **caractérisé en ce que** l'on calcule l'autre ensemble de coûts selon une fonction donnée à l'avance, en fonction de la différence entre le niveau et le niveau ($h_{min}$) minimum ou le niveau ($h_{sec}$) de sécurité du composant (7) de noeud respectif accumulant de l'eau.

**3.** Procédé suivant la revendication 1, **caractérisé en ce que** la fonction est une fonction linéaire.

**4.** Procédé suivant l'une des revendications précédentes, **caractérisé en ce que** l'on unit les ensembles de coûts pour la consommation d'énergie et/ou l'usure respective et les autres ensembles de coûts pour le niveau respectif de facteurs de pondération différents.

**5.** Système (19) de commande d'un réseau (1) d'adduction d'eau, qui comprend des composants (2 ; 4, 5, 6, 7) de noeuds et des composants (3 ; 8, 9, 10, 11) d'arêtes,

dans lequel on injecte, on prélève ou on accumule de l'eau aux composants (2 ; 4, 5, 6, 7) de noeuds et on transporte l'eau entre les composants (2 ; 4, 5, 6, 7) de noeuds par les composants (3 ; 8, 9, 10, 11) d'arêtes, et plusieurs des composants (9, 10, 11) d'arêtes peuvent être commandés en ce qui concerne leur comportement au débit de l'eau,

dans lequel le système (19) est constitué pour commander les composants (9, 10, 11) d'arêtes pouvant être commandés selon un plan (15) de commande, et

dans lequel le système (19) comprend un dispositif (18) de traitement, qui est agencé de manière à ce que

- le plan (15) de commande soit réalisé sous la forme d'une succession dans le temps de commandes des composants (9, 10, 11) d'arêtes pouvant être commandés sur la base de conditions aux limites, qui contiennent, pour chaque composant (7) de noeud accumulant de l'eau, respectivement un niveau ($h_{min}$) minimum en-dessous duquel on ne doit pas passer, et

- le plan (15) de commande soit optimisé à l'aide d'une fonction cible, dans laquelle on multiplie, pour chaque composant (9, 10, 11) d'arête pouvant être commandé, le nombre de leurs commandes par un ensemble de coûts pour une consommation d'énergie et/ou une usure des composants (9, 10, 11) d'arêtes respectifs, et on forme ensuite la somme sur tous les composants (9, 10, 11) d'arêtes pouvant être commandés, **caractérisé**

**en ce que** le dispositif (18) de traitement est en outre agencé de sorte que, pour chacun des composants (7) de noeuds accumulant de l'eau, soit fixé un niveau ($h_{sec}$) de sécurité dépassant le niveau ($h_{min}$) minimum, et que la fonction cible soit complétée pour chaque composant (7) de noeud accumulant de l'eau de respectivement une autre somme sous la forme d'un autre ensemble de coûts dépendants du niveau, qui est minimum pour un niveau correspondant au niveau ($h_{sec}$) de sécurité et maximum pour un niveau correspondant au niveau ($h_{min}$) minimum,

le plan (15) de commande étant déterminé dans le dispositif (18) de traitement d'un système (19) de commande sur la base des conditions aux limites,

dans lequel le système (19) de commande comprend une interface (20) de commande des composants (9, 10, 11) d'arêtes pouvant être commandés, et

dans lequel le plan (15) de commande peut être remis en tout ou partie au système (19) de commande pour la commande du réseau (1) d'adduction d'eau.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3450638 A1